# EUROPEAN PATENT APPLICATION

(11) **EP 1 097 738 A2**
(43) Date of publication of application: **09.05.2001**
(21) Application number: 00309814.2
(22) Date of filing: 06.11.2000
(51) Int. Cl.: A63F 13/10

(54) **Game system and computer readable storage medium therefor**

(30) Priority: 08.11.1999 JP 31719199
(71) Applicant: Konami Corporation, Minato-ku, Tokyo (JP)
(72) Inventor: Takahashi, Masayuki, Tokyo (JP)
(74) Representative: Haley, Stephen

(57) **Abstract**

A game system (1) includes a display unit (11, 12) for displaying game picture, an input unit (10) for outputting a signal corresponding to an operation by a user, and a game control unit (2) for executing a game based on a game program by referring to the signal from the input unit (10) and for reflecting situation of the game on the game picture. The game control unit (2) includes: a character creating means for creating information concerning a user-operated character to be operated by the user by referring to the signal from the input unit; a first game executing means for executing a first game by controlling action of the user-operated character on a virtual game field based on the signal from the input unit and for changing the information concerning the user-operated character according to results of the action; and an attribute allotting means for ending the first game if a prescribed condition is satisfied in the first game, and for allotting one or more attribute to the user-operated character based on the information concerning the user-operated character at the time when the first game is ended. The character creating means creates the information concerning the user-operated character based on the information concerning the user-operated character to which the attribute is allotted.

## Description

The present invention relates to a game system wherein a user can virtually undergo an adventure, a fight or the like, by operating a character on a game screen according to the command from the user.

As games executed on a video game unit using a computer, there are known roll playing games or simulation roll playing games in which characters displayed on game screen act, by the operation of a user, to undergo various fights and adventures to attain a final goal. In this kind of games, as characters operated by the user grow up through various fights and/or adventures, the user gradually imports his/her feelings into such characters, and feels a great emotion when the final goal is achieved.

However, this kind of games of the prior art end after the achievement of the final goal, and the characters trained by the user in that game cannot be used in other games. Consequently, the user gradually loses his/her memory about such games.

Therefore, it is an object of the present invention to provide a game system in which, even after the achievement of the final goal by a character that the user has trained, the user can still use the character in other games with using the skill of that character.

Also, it is another object to provide a game system in which the user can feel further empathy with the character that he/she operates until the achievement of the final goal.

According to one aspect of the present invention, there is provided a game system including a display unit for displaying game picture, an input unit for outputting a signal corresponding to an operation by a user, and a game control unit for executing a game based on a game program by referring to the signal from the input unit and for reflecting situation of the game on the game picture, wherein the game control unit includes: a character creating unit for creating information concerning a user-operated character by referring to the signal from the input unit; a first game executing unit for executing a first game by controlling action of the user-operated character on a virtual game field based on the signal from the input unit and for changing the information concerning the user-operated character according to results of the action; and an attribute allotting unit for ending the first game if a prescribed condition is satisfied in the first game, and for allotting one or more attribute to the user-operated character based on the information concerning the user-operated character at the time when the first game is ended, wherein the character creating unit creates the information concerning the user-operated character based on the information concerning the user-operated character to which the attribute is allotted.

According to similar aspect of the present invention, there is provided a computer readable storage medium storing game program for executing a game based on a game program by referring to a command given by a user through an input unit and by reflecting situation of the game on a game picture, wherein the game program makes the computer function as: a character creating unit for creating information concerning a user-operated character to be operated by the user by referring to the signal from the input unit; a first game executing unit for executing a first game by controlling action of the user-operated character on a virtual game field based on the signal from the input unit and for changing the information concerning the user-operated character according to results of the action; and an attribute allotting unit for ending the first game if a prescribed condition is satisfied in the first game, and for allotting one or more attribute to the user-operated character based on the information concerning the user-operated character at the time when the first game is ended, wherein the character creating unit creates the information concerning the user-operated character based on the information concerning the user-operated character to which the attribute is allotted.

In accordance with the invention described above, the information concerning the user-operated character is created, based on the command from the user given from the input unit. In the first game, the user-operated character acts on a virtual game field based on the signal from the input unit. The information concerning the user-operated character is changed according to the action results of the character. When a prescribed condition is satisfied in the first game, the first game ends and, at the same time, one or more attribute is allotted to the user-operated character based on the information concerning the user-operated character at the time when the first game ends. Otherwise, the information concerning the user-operated character is created based on the information concerning the character to which the attribute is allotted.

Therefore, since a certain attribute is allotted to the user-operated character according to the action contents of this character, when the first game has ended, the user can play the first game with taking the attributes into consideration. Also, the user can challenge the first game again, by creating a new character taking profit of the information concerning the character to which the attribute is allotted. The user can create a lot of favorite characters by repeating this. Moreover, as the attributes allotted to the character at the end of the first game change according to the action contents of this character, the user can enjoy a game with a large degree of freedom.

According to another aspect of the present invention, there is provided a game system including a display unit for displaying game picture, an input unit for outputting a signal corresponding to the operation by a user, and a game control unit for executing a game based on a game program by referring to the signal from the input unit and for reflecting situation of the game on the game picture, wherein the game control unit includes: a character creating unit for creating information concerning a user-operated character by referring to the signal from the input unit; a mode selecting unit for selecting one of a first mode and a second mode; a first game executing unit for executing a first game by controlling action of the user-operated character on a virtual game field based on the signal from the input unit when the first mode is selected, and for changing the information concerning the user-operated character according to the results of the action; an attribute allotting unit for ending the first game if a prescribed condition is satisfied in the first game, and for allotting one or more attribute to the user-operated character based on the information concerning the user-operated character at the time when the first game is ended; and a second game executing unit for executing a second game when the second mode is selected, the second game executing unit using the user-operated character to which the attribute is allotted and executing the second game in which dominance between characters changes according to the attribute; wherein the character creating unit creates the information concerning the user-operated character based on the information concerning the user-operated character to which the attribute is allotted.

In accordance with the game system as mentioned above, the information concerning the user-operated character is created based on the command from the user given from the input unit. When the first mode is selected, the first game is performed in which the user-operated character acts on a virtual game field based on the signal from the input unit. The information concerning the user-operated character is changed according to the action results of the character. When a prescribed condition is satisfied in the first game, the first game ends and, at the same time, one or more attribute is allotted to the user-operated character based on the information concerning the user-operated character when the first game ends. When the second mode is selected, the character to which the attribute is allotted is used to perform the second game in which the dominance between characters change according to the attributes. Otherwise, the information concerning the user-operated character is created based on the information concerning the character to which the attribute is allotted.

Therefore, the user can further be attached to the character he/she has created, because the character that has cleared the first game and to which attributes are allotted can be used for the second game.

The game system may further include a memory device for storing the information concerning the user-operated character to which the attribute is allotted, every time when the attribute is allotted to the user-operated character by the attribute allotting unit. The game control unit may include a character selecting unit for selecting two or more characters from the characters, for which the information is stored in the memory device, when the second mode is selected. The second game may include a match game for competing by using two or more characters selected by the character selecting unit.

Therefore, the user can enjoy increasing characters having favorite attributes by playing and clearing the first game again and again, and further be attached to these characters because the user can select and use a favorite character among these characters to perform the match game which is the second game.

The game system may further include a memory device for storing the information concerning the user-operated character to which the attribute is allotted, every time when the attribute is allotted to the user-operated character by the attribute allotting unit. The character creating unit may select the character from the characters for which the information is stored in the memory device and creates the information concerning the user-operated character based on the information concerning the selected character. Therefore, the user can enjoy collecting characters having favorite attributes by playing and clearing the first game again and again.

The character creating unit may create the information concerning the user-operated character based on the information concerning one or more characters to which attribute is allotted in advance. Therefore, the user can create a user-operated character based on characters to which attributes are allotted in advance, even if the first game has never been cleared, and hence even beginners can enjoy the first game without feeling boring.

The character selecting unit may select one or more character to which attribute is allotted in advance. Therefore, the user can clear the first game and use the character to which attributes are allotted in the second game and, in addition, play the match game by selecting characters to which attributes are allotted in advance, even if the first game has never been cleared. Hence, the room of character selection can be enlarged.

The character creating unit may create the information concerning the user-operated character based on the information concerning a single character to which the attribute is allotted. Therefore, the user can create, based on any one of characters to which attributes are allotted by clearing the first game, a new character succeeding the information of that character, and challenge the first game again.

Allotting the attribute to the user-operated character at the end of the first game may be performed independently of the information concerning the character to which the attribute is allotted. Therefore, even for the character created based on the information concerning the character to which the attribute is allotted, the attribute to be allotted at the end of the first game can secure a room to be decided by the intent of the user, namely action results of that character in the first game.

The first game may include a plurality of stages each having different ending condition, and the prescribed condition in the first game is satisfied when all of the ending conditions of the plurality of stages are satisfied. The advantages and disadvantages for satisfying the ending conditions may change according to the information concerning the user-operated character, and the advantages and disadvantages for satisfying the ending conditions may be different from each other for the plurality of stages if the information concerning the user-operated character is fixed.

Therefore, the information concerning the user-operated character happens to be disadvantageous in the second stage, even when it is advantageous in the first stage, for satisfying the ending condition of respective stages, so the game is more strategic.

The information concerning the user-operated character may include a plurality of parameters defining the skill of the character, and the possession information of a plurality of items each prepared as a factor for changing the skill of the character. Therefore, the user can train the user-operated character to more individualized character in the first game. The user can confirm items possessed by the user-operated character through the possession information concerning respective one of a plurality of items prepared as factors for changing the skill of the character.

The plurality of parameters may be created by multiplying the plurality of parameters to which the attribute is allotted by a prescribed rate. Therefore, based on any one of characters to which attributes are allotted by clearing the first game, a new character having skills similar to those of that character can be created.

Each of the plurality of items may be allotted with a characteristic indicating one of the plurality of attributes and a point indicating magnitude of the characteristic. The game control unit may include a total point calculating unit for calculating the total point for each of the characteristics of the item that the user-operated character possesses at the end of the first game, and the attribute allotting unit may create the information concerning the user-operated character based on the total point calculated by the total point calculating unit. Therefore, it becomes more important to select items to be possessed by the user-operated character, and the game becomes more strategic.

The attribute allotting unit may allot an attribute corresponding to the characteristic having a largest total point to the user-operated character when there is only one characteristic having the largest total point calculated by the total point calculating unit, and allot an attribute corresponding to one of the characteristics having the largest total point to the user-operated character, based on a plurality of parameters defining the skill of the user-operated character, when there are two or more characteristics having the largest total point calculated by the total point calculating unit.

Therefore, it becomes more important to select items to be possessed by the user-operated character and, in addition, to select action contents of the character, so the game becomes more strategic.

The result of the action of the user-operated character in the first game may be determined based on the information concerning the user-operated character. Therefore, skills and items possessed by the user-operated character can be used for the action of such a character.

The nature, utility, and further features of this invention will be more clearly apparent from the following detailed description with respect to preferred embodiment of the invention when read in conjunction with the accompanying drawings briefly described below.

In the Drawings
FIG. 1 shows schematic configuration of a game system according to the present invention;
FIG. 2 shows a flowchart of the whole game according to the present invention;
FIG. 3 shows a connection state of a plurality of game systems for performing a two-VS-two match in the match game according to the present invention;
FIG. 4 shows the connection state of a plurality of game systems when four users are opposed to each other in the match game according to the present invention;
FIG. 5 shows an example of an outdoor map in the game according to the present invention;
FIG. 6 shows the character action limited by topographic attributes;
FIG. 7 shows an example of an indoor map in the game according to the present invention;
FIG. 8 shows an example of conditions for respective test in hunter test;
FIG. 9 shows the characterization of a character;
FIG. 10 shows an example of contents calculated by the CPU 2, for deciding character action results;
FIG. 11 shows the relation between a plurality of parameters of a character of a master, and a plurality of parameters of a new character set based on the master;
FIG. 12 is a flowchart showing the processing of the game system 1 when the game program starts;
FIG. 13 is a flowchart showing the processing of the game system in the main game;
FIG. 14 is another flowchart showing the processing of the game system in the main game;
FIG. 15 is a flowchart showing the processing of the game system in the first test;
FIG. 16 shows an example of picture for setting the skill of a character in the main game;
FIG. 17 shows an example of bust-up picture in the main game;
FIG. 18 shows an example of bust-up picture having options in the main game; and
FIG. 19 is a flowchart showing the processing of the game system in the match play game.

Now, preferred embodiments of the present invention will be described with referring to attached drawings.

### [1] System Configuration

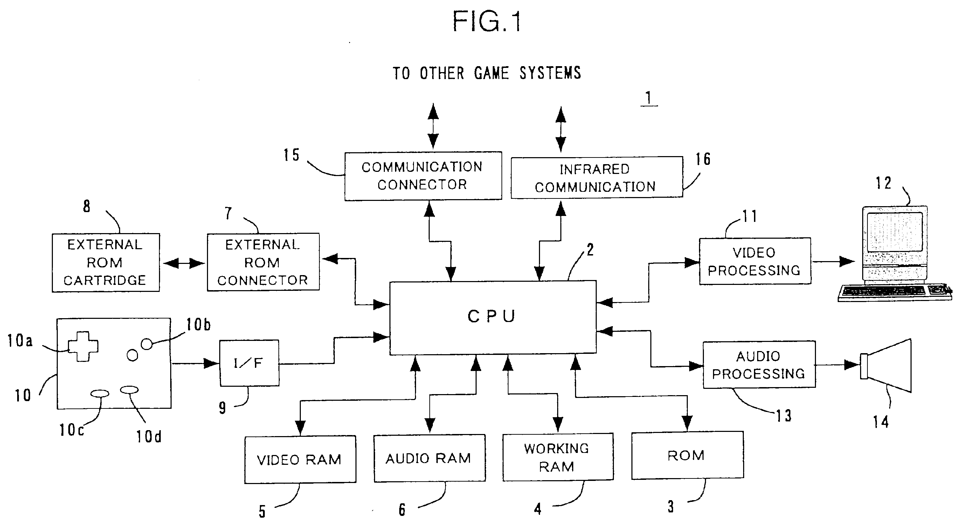

FIG. 1 shows the schematic configuration of a game system 1 according to the present invention. As shown in FIG. 1, the game system 1 includes a CPU 2 mainly composed of a microprocessor unit.

An external ROM cartridge 8 is removably connected to the CPU 2 through an external ROM connector 7. The external ROM cartridge 8 includes a semiconductor memory (ROM or, EP-ROM or the like) storing programs of the game according to this embodiment. Also, the external ROM cartridge 8 includes a battery and a battery backup RAM. Such a RAM stores data of the character created by the user in the course of the game. Here, a storage medium to store the game program may be any storage medium such as CD-ROM, DVD-ROM or the like, and in this case the system may be configured to connect a unit for reading data from these storage media to the CPU 2.

The CPU 2 has a function as game control unit for supervising and controlling the whole system 1 according to the game program stored in the external ROM cartridge 8, with referring to the signal from a controller 10 input via an interface 9.

Besides, a ROM 3 as main memory unit, a working RAM 4, a video RAM 5 and a audio RAM 6 are connected to the CPU 2. The ROM 3 stores an operating system serving as program necessary for operation control of whole the game system 1 and data necessary for the execution thereof. The working RAM 4 includes a plurality of memory areas for temporarily storing various data in the course of game processing, and stores, for example, parameters of characters appearing in the game, items obtained in the course of game processing, or the number of times such items are used. The video RAM 5 temporarily stores various video data read out from the external ROM cartridge 8 by the CPU 2. The audio RAM 6 temporarily stores various audio data read out from the external ROM cartridge 8 by the CPU 2. It is noted that all of the data stored in the working RAM 4, the video RAM 5 and the audio RAM 6 may be stored in a single RAM.

The controller 10 is connected to the CPU 2 through the interface 9. The controller 10 is an input unit for outputting a signal corresponding to the user's operation. The controller 10 includes a cross key 10a for instructing the motion direction of the character operated by the user and displayed on the video display device 12, or selecting character's actions, a decision key lOb for deciding character's action, a selector key 10c for instructing to display character's action or character status on the video display device 12, and a start key lOd for instructing the start the game. By them, in a game system according to this embodiment, the user can feel as if he or she is the character displayed on the video display device 12, and control the character as desired, according to the aforementioned program.

Further, the video display device 12 is connected to the CPU 2 through an video processing circuit 11. The video processing circuit 11 converts video data stored in the video RAM 5 into a video signal, according to the command of the CPU 2, and outputs it to the video display device 12 at a prescribed timing. The video display device 12 is a display unit for displaying various game pictures output from the video processing circuit 11.

A speaker 14 is connected to the CPU 2 through an audio processing circuit 13. The audio processing circuit 13 converts audio data stored in the audio RAM 6 into an analog sound signal, according to the command of the CPU 2, and outputs it to the speaker 14 at prescribed timings.

A communication connector 15 and an infrared communication unit 16 are connected to the CPU 2. The connection of a prescribed communication cable to the communication connector 15 allows the connection to other game systems and playing a match with another user. On the other hand, the infrared communication unit 16 can exchange data, by infrared ray, with a plurality of other game systems to enable a synchronized play with a plurality of other users.

### [2] Outline of MAIN GAME

The game contents controlled by the CPU 2 according to the game program will be described below.

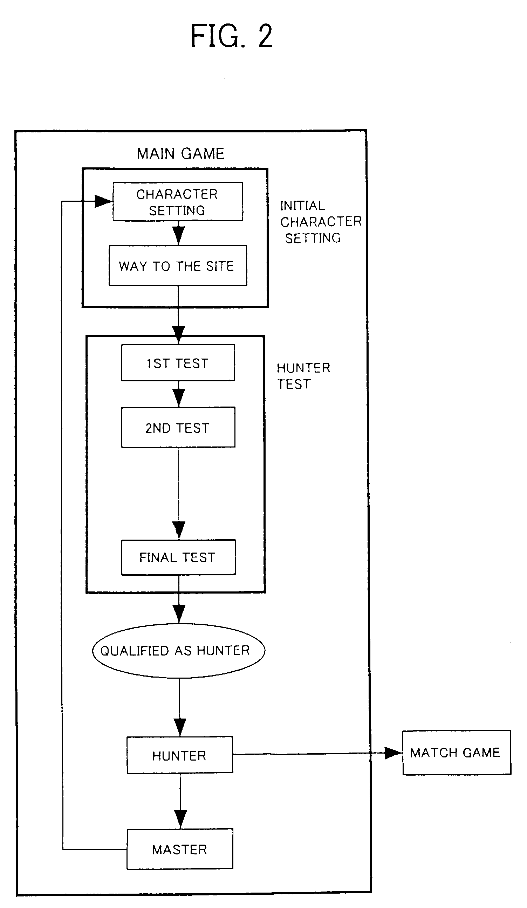

As shown in FIG. 2, this game is characterized by being composed of "MAIN GAME (first game)" and "MATCH GAME (second game)".

The first "MAIN GAME" progresses according the flow in which the character set to be operated by the user (hereinafter also referred to as "user-operated character") challenges the hunter test, including a plurality of tests shown in FIG. 2, to be qualified as a hunter by clearing the test, and becomes a master. And, a flow is repeated in which the user-operated character succeeding the skills of the master challenges the hunter test. The final skills (skills at the moment of qualification as a hunter) of the user-operated character are decided by the behavior of the character in the hunter test.

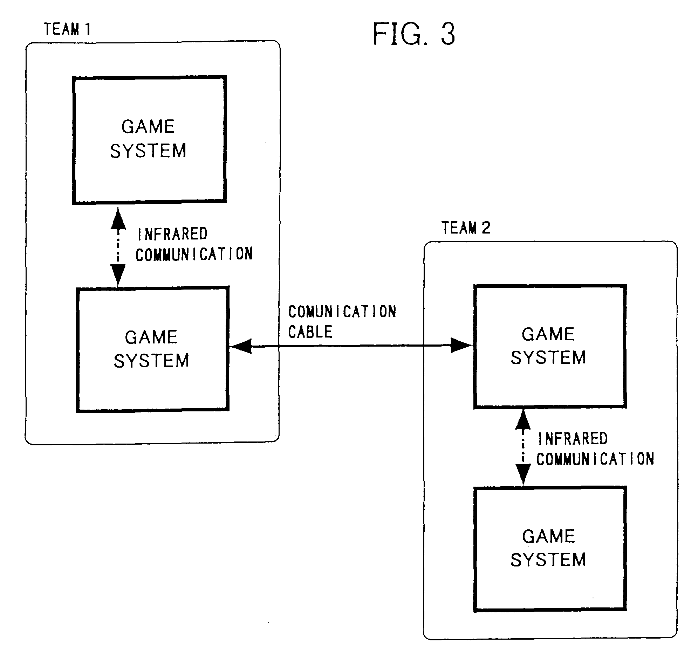

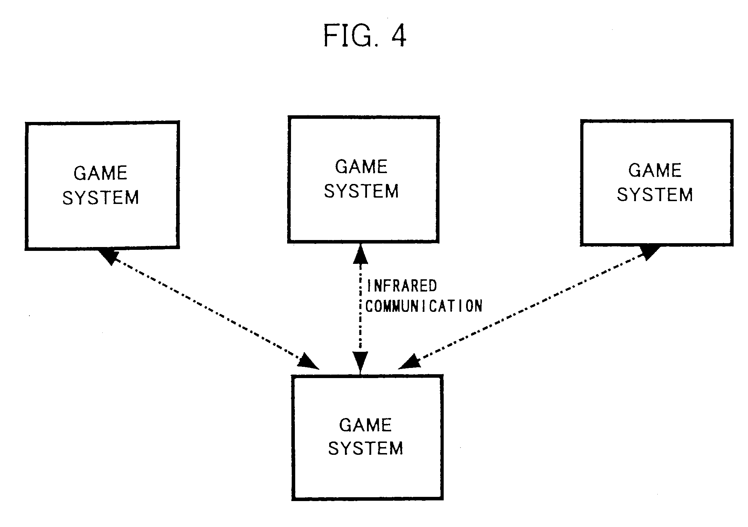

As shown in FIG. 3 or FIG. 4, in the second "MATCH GAME", a plurality of users play a match play, using characters qualified as a hunter in the "MAIN GAME" shown in FIG. 2, with a plurality of game systems 1 being connected through a communication means.

The "MAIN GAME" and the "MATCH GAME" are separate games. However, this invention is characterized in that the users can play "MATCH GAME" by using the skills of the characters qualified as a hunter in the "MAIN GAME".

Now, the contents of the "MAIN GAME" will be described, according to the flowchart shown in FIG. 2.

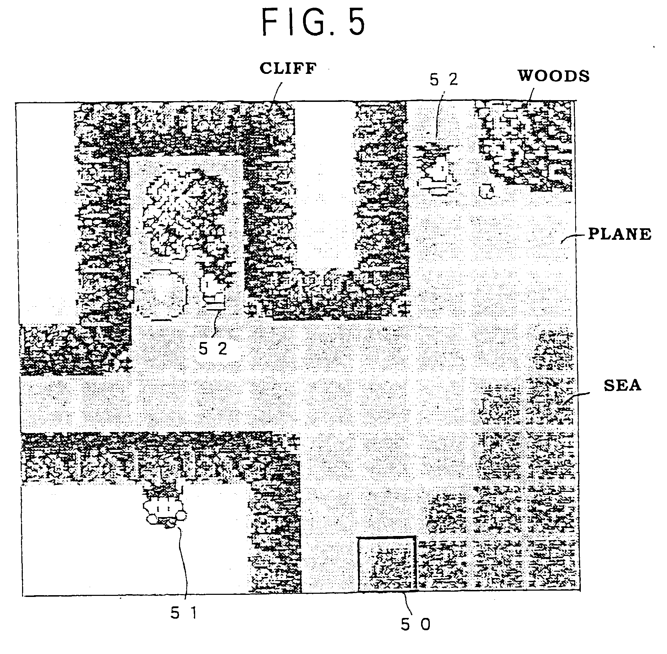

The user sets one character of hunters set previously in the game program, and performs the hunter test selected from a plurality of tests preset in the game program and executed by the CPU 2, by operating such a character 51 by the controller 10 on a game field (map) (an example is shown in FIG. 5) displayed on the video display device 12.

The map shown in FIG. 5 is preset in the game program, a part of which is displayed on the video display device 12 by the CPU 2, and the other parts are displayed in a scrolled manner according to the moving direction of the character 51 operated by the user. Moreover, as shown in FIG. 5, such a map is covered with two-dimensional squares 50. The number of squares 50 to be displayed on a single screen of the video display device 12 is decided beforehand by the game program, and the character 51 operated by the user is placed in one square 50 displayed on a single screen of the video display device 12. In addition to the character 51 operated by the user, a plurality of characters 52 controlled by the CPU 2 according to the game program are also shown on the map.

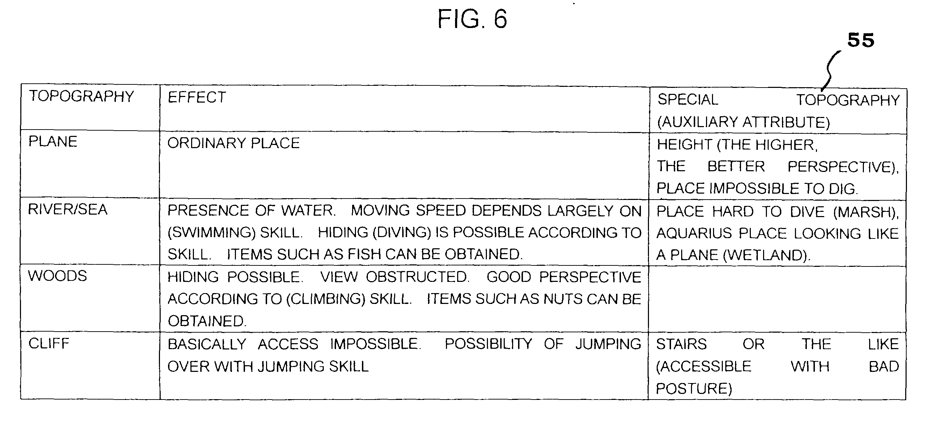

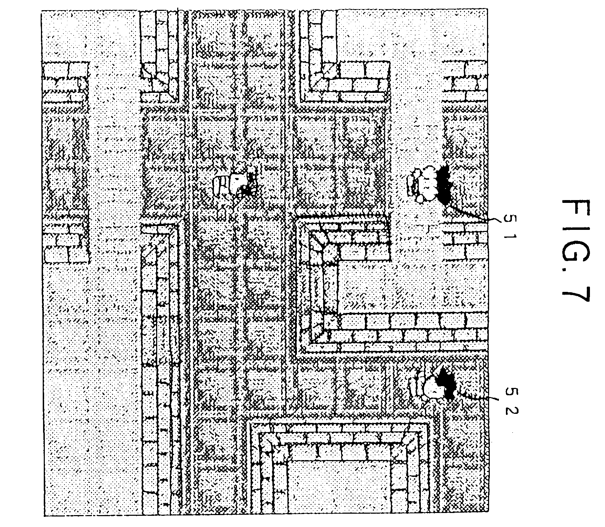

An attribute "topography" is set to each square 50, and such a topography includes different kinds such as "FIELD", "RIVER", "SEA", "LAGOON", "WETLAND", "WOODS", "CLIFF" or the like. The design of the square 50 displayed on the map is determined according to the kind of the topography. In addition, selectable actions (described later in detail) of the character placed in the square 50 is set to be affected by the limitation due to the kind of topography or the like. For example, if the character is placed in the "FIELD", the "HIDE" command cannot be executed. If the character is placed in the "WOODS", the "HIDE" command can be executed. Further, the character can jump over a "CLIFF" by "JUMP" command, but the character cannot stay in "CLIFF". Some topographies have the attribute of height, and for instance, for the same field, a higher field presents a better perspective. There are indoor maps as shown in FIG. 7. For the indoor maps shown in FIG. 7, while the basic topographies are similar, the auxiliary attribute shown by the symbol 55 of FIG. 6 are different. For instance, some ground cannot be dug even if it is "FIELD". This introduces variety into tactics and rules in various stages.

The hunter test shown in FIG. 2 includes tests of 5 levels (first test to fifth (final) test) for which different clear conditions are set. The kind of map displayed on the video display device 12 is different for each test. Here, six or more levels can be set for the hunter test.

Moreover, each test (stage) is a system of tactics simulation category. The RPG-like natures such as character growth are introduced, and the action-like natures are introduced in the attacking methods and events.

In the hunter test, the user operates and moves the character 51 by the controller 10, so as to achieve the clear conditions set in each test.

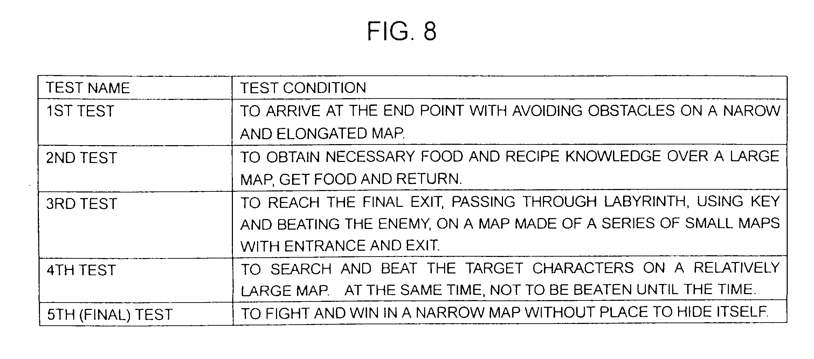

The clear conditions set to each test are, as shown in FIG. 8, different from test to test. Whether the character 51 operated by the user is advantageous or disadvantageous to achieve the clear conditions set to each test is dependent on the information concerning the user-operated character 51 (a plurality of parameters defining the skill of the character 51, and the possession information concerning each of a plurality of items prepared as factors for changing the skill of the character). Namely, each stage will be more or less difficult according to the information about the character 51. The method of satisfying the clear conditions is not limited to one method. For example, in the second test in FIG. 8, to obtain knowledge about the cooking, the user can get an item "COOKING BOOK", or alternatively search for a character having the knowledge of cooking and learn by talking with him/her.

Action contents of the character 51 operated by the user are those based on commands displayed on the video display device 12 by the CPU 2. Plural commands are preset in the game program and displayed on the video display device 12. Specifically, the commands include "MOVE", "ATTACK", "DEFEND", "TALK", "WALK", "RUN", "SWIM", "DIVE", "CLIMB", "JUMP", "HIDE", "SEARCH", "MAKE", "THROW", "USE ITEM", "PLACE ITEM", "PICK-UP ITEM", "COMBINE ITEMS" or the like.

When the user selects and decides a desired command among these commands displayed on the video display device 12, the CPU 2 executes a prescribed processing corresponding to the decided command on the map. For instance, if the character 51 operated by the user is in the square 50 of "WOODS" on the map displayed on the video display device 12 and the user selects and decides the "HIDE" command, the CPU 2 executes the "HIDE" processing. This makes the position of the user-operated character 51 invisible from other characters 52 controlled by the CPU 2 according to the game program, and consequently, this has an effect to avoid attacks from such an other character 52. In addition, the user can get the information from the other character 52 by "TALK" command, or attack the other character 52 by "ATTACK" command. However, the action of the character 51 executed by these commands are limited by the kind of topography mentioned above. Further, as the result of an action of the character 51 executed by these commands, whether such an action succeeds or not, and/or the extent of impact to the other character 52 (for example, damage of the other character 52 by the attack) depends on the parameters indicating the character skill mentioned below and the items that the character 51 possesses at that time.

A value called "HIT-POINT" (designated as "HP" hereafter) is set to all characters positioned in any square 50 on the map, and when attacked by other characters 52, the HP decreases according to the attack strength (the magnitude of the parameter "ATTACK" mentioned below). The character's HP may also decrease by the event (e.g., caught in a trap, or the like) executed by the CPU 2 on the map. The character disappears from the map, when its HP becomes "0". When the HP of the character 51 operated by the user reduces to "0" by the attack from other characters 52, the hunter test is finished at that moment. Thus, the user should operate the character 51 so that its HP would not become "0", and achieve the clear conditions set for respective test.

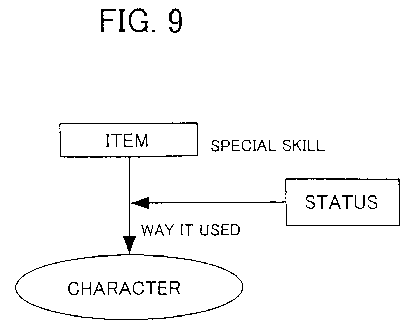

Characters appearing in the "MAIN GAME" are characterized by their status and items they possess, as shown in FIG. 9. The status defines (i.e., indicates) the character's skill and is a factor closely related with the character itself. The item is a factor enhancing the character's skill. The user-operated character grows up by enhancing these factors during the "MAIN GAME". These factors have an important nature to be succeeded to the disciple or used in the match play.

Now, the detailed contents of status and items will be described below.

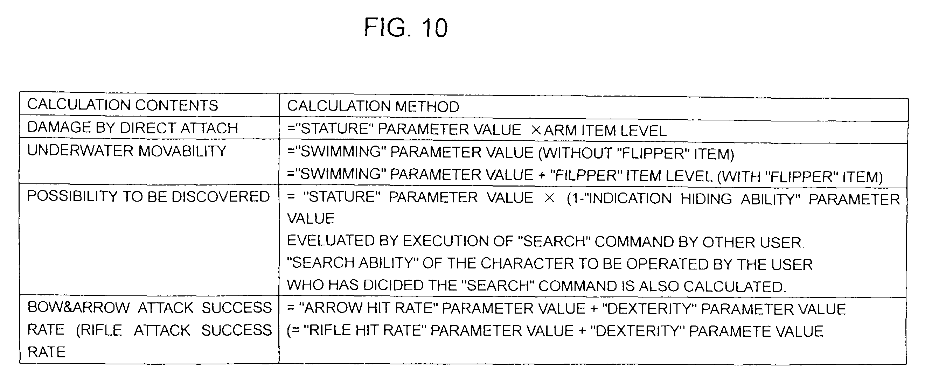

First, the status include a plurality of parameters defining the character's skill. To be more specific, they include invariable parameters representing character's "HEIGHT", "WEIGHT", "PHYSIQUE", "SEX", "HOMETOWN", "PERSONALITY" or the like, and variable parameters representing character's "STRENGTH", "ATTACK", "DEFENSE", "RUN (speed)", "SWIM (skill)", "DIVE", "CLIMB", "JUMP", "HIDE (how to erase its presence)", "SEARCH (ability)", "MAKE", "DEXTERITY", "THROW" or the like. Moreover, variable parameters concerning the use of items include "ARROW HIT RATE", "RIFLE HIT RATE" or the like. These parameters are stored temporarily in the working RAM 4. In addition, these parameters are read out by the CPU 2 as needed and increased and/or decreased according to the action of that character 51. In other words, parameters corresponding to the commands (action) vary according to the frequency of execution of commands (action) mentioned above. For instance, in the hunter test, the "THROW" parameter increases if the user selects and decides the command "THROW" and, on the contrary, the "MAKE" parameter decreases if the user does not select and decide the command "MAKE". Further, the "HIDE" parameter increases each time the command "HIDE" is used, and "SWIM" parameter increases each time "MOVE (underwater)" command is used. Thus, the user can train his character 51 to have an excellent ability in a particular skill, among a plurality of skills mentioned above. Further, as mentioned above, these parameters influence the action results of the character 51. For instance, the higher is the parameter "STATURE", the lower is the success rate of the action "HIDE", and the higher is the success rate (higher rate of finding) when the other user executes the command "SEARCH". When the character 51 attacks directly other character 52 by the action "ATTACK" (not a distant attack by means of an item such as "RIFLE" or "BOW", but an attack to the character 52 positioned in the adjacent square 50), the damage suffered by that character 52 is higher, if the parameter "STATURE" is high. The variable parameter concerning the use of items such as "ARROW HIT RATE" increases each time the item "BOW & ARROW" is used. As shown by the symbol 61 in FIG. 10, when the character uses "BOW & ARROW" and attacks other character, the success rate is decided by the parameters: "DEXTERITY" + "ARROW HIT RATE".

In addition, these parameters will serve as a guideline to determine one of plural hunter titles (described later) given to the character when the user has finished all the hunter tests.

The item takes the form of so-called tool, and more specifically several thousands kinds of items including "KNIFE", "BOW & ARROW", "MEDICAL DRUG", "BOOK", "FOOD" or the like, are preset in the game program. These items has its own fixed skill value (level) and is used to give the character a special skill. Namely, the items are factors to change the character's skill mentioned above. For example, even when the character 51 has a low parameter of "SWIM", it can obtain the same effect as the character having a higher parameter of "SWIM" by using an item "FLIPPER" and executing the command "SWIM". In other words, as shown by the symbol 60 in FIG. 10, when the command "SWIM" is executed, the CPU 2 calculates "UNDERWATER MOBILITY" by adding "FLIPPER" item skill value to the parameter "SWIM". Thus, the skill value of these items also influence the action results of the character 51.

The user can make the character 51 use the obtained items, by the command "USE ITEM" or "THROW". For example, if the command "THROW" is executed for the item "SHOT" obtained by the character 51, the character 51 can attack another character 52 and decrease its HP. However, the ability to use an item depends on the parameter of the character 51, so a character 51 having low parameter "STRENGTH" cannot put a "SHOT", for example.

These items are preset in any square 50 on the map, and can be obtained by placing or passing the character 51 operated by the user on or through that square 50. Sometimes, the character 51 operated by the user can get the item from a character 52, not operated by the user, placed on any square 50 on the map by talking with the latter by the "TALK" command. The item obtained by the character 51 is stored temporarily in the working RAM 4 by the CPU 2, read out and processed by the CPU 2 when the user selects and decides the command "USE ITEM", "PLACE ITEM" or "COMBINE ITEMS" or the like. Here, when an item is set in the square 50 of "RIVER" on the map, the character cannot get the item without executing "DIVE" command on this square 50. Some items cannot be obtained without executing "SEARCH" command at any square 50 on the map.

The number of use times of all items is counted by the CPU 2 and stored in the working RAM 4. In other words, when the user selects the obtained item by the controller 10 and then makes the character 51 use the item by the command "USE ITEM" or "THROW", the CPU 2 receives a signal (signal for the selected item) from the controller 10, and counts up the counter of the number of use times for the selected item. The skill value (i.e., level) of an item is fixed in principle as mentioned above, however, the CPU 2 may increase the skill value for the item based on the number of use times.

When the character 51 operated by the user has already obtained several items, the character 51 can combine items to produce a new item by executing the command "COMBINE ITEMS" by CPU 2. More specifically, if the character 51 has "SIGHT SCOPE" and "RIFLE", the user can select the command "COMBINE ITEMS" and selects and decides "SIGHT SCOPE" and "RIFLE", the CPU 2 reads out a new item "RIFLE WITH SIGHT SCOPE", which has a higher "HIT RATE" skill value than the "RIFLE" and which corresponds to the combination of these two items, from the external ROM cartridge 8, and stores it in the working RAM 4 in an area for storing the item obtained by the character 51. Moreover, the user can combine "BOW & ARROW" and "LIGHTER" to obtain a new item "BOW SHOOTING A FIRING ARROW" or combine "SIGHT SCOPE" and "HAMMER" to destroy the "SIGHT SCOPE" and obtain a "CONVEX LENS". These combined items are those the character 51 cannot normally obtain on the map. Thus, the user can contrive a combination of items to obtain a new skill associated with the plurality of parameters described above, and produce a rare item that other users can hardly obtain.

In addition, similarly to parameters mentioned above, the kind of item that the character 51 operated by the user has obtained serves as a guideline to determine which hunter title is given to the character when the user has finished all the hunter tests.

Sometimes, in the hunter test, the character can learn the information concerning how to clear the hunter test or how to combine items to produce a special item by talking with a character 52, or can be temporarily helped by the character 52 to clear the test. However, according to the parameter of the character 51 operated by the user, the contents of the talk are varied by the CPU 2. For instance, when the character 51 operated by the user talks to a character "A", the character "A" may refuse to talk if parameter of the character 51 is low. On the contrary, the character 51 may be respected and not attacked by the character "A". Moreover, in the hunter test, if the character 51 often talks to a character "A", another character "B" becomes hostile to the character 51 and will not teach the information. Thus, the flow of the game changes according to the action of the character 51 operated by the user.

The "MAIN GAME" ends when the user-operated character 51 takes the hunter test mentioned above and satisfies the conditions set for the final test. Thus, the character 51 is qualified as a hunter as shown in FIG. 2, and obtains a hunter title. The final goal of the "MAIN GAME" is to acquire the hunter title. The hunter title means the character's attribute, and a plural kinds of the hunter title are prepared in advance in the program, including, for instance, "GOURMET HUNTER", "POTHUNTER", "PHANTOM HUNTER", "TREASURE HUNTER" or the like. Which hunter title (hunter category) to set is decided according to the parameter of the character 51 operated by the user and the kind of the items that the character 51 obtained, when that character 51 has satisfied the clear conditions set to the final test.

Items serving as factors for deciding the hunter title have a characteristic to indicate suitableness for a hunter and, for example, items "KITCHEN KNIFE" and "CHOPPING BOARD" have a characteristic as "GOURMET HUNTER", and the item "LASSO" has a characteristic as "PHANTOM HUNTER". A point is added to these characteristics, and for example, 50 points are added to the item "KITCHEN KNIFE", 100 points are added to the item "CHOPPING BOARD", and 50 points are added to the item "LASSO". Thus, when a character 51 has a plurality of items having different characteristics, the CPU 2 calculates the total of points for each characteristic and decides the hunter category. For example, when the character 51 has only items "CHOPPING BOARD" and "LASSO", the hunter title of "GOURMET HUNTER" is given to the character 51 because the item "CHOPPING BOARD" has a larger point than the item "LASSO". When a character 51 has a plurality of items having different characteristics, and the total values of point of each characteristic are equal, for instance, when the character 51 has only items "CHOPPING BOARD" and "LASSO", the hunter category of this character 51 is decided by a plurality of parameters indicating the skill of that character 51. For example, the character 51 becomes "GOURMET HUNTER" if the parameter "MAKE" is large, and becomes a "PHANTOM HUNTER" if "SEARCH" parameter is large. If a master mentioned below exists among these characters 51, the hunter category may also be decided according to the hunter category of the master.

Some of items are general items (such as the item "REVOLVER") which do not have a characteristic indicating the relation to the hunter category, and if the character 51 operated by the user only has general items when it has achieved the clear conditions set to the final test, the hunter category of that character 51 is decided by a plurality of parameters of that character. If a master exists for the characters 51, the hunter category may also be decided according to the hunter category of the master. However, if none of the plurality of parameters of the character 51 has attained any category of hunter (for instance, lack of uniformity for the selection of options), and if there is no master, the hunter category of such a character 51 is decided as a standard "CONTACTED HUNTER" or the like.

The relation parameter, representing the relation with the character 51 operated by the user, is set for characters other than the user-operated character 51. For example, if a relation parameter "HATING POTHUNTER" is set to the character, it will affect the confidence with the character 51 operated by the user whose master is a "POTHUNTER".

Thus, the hunter title to be given to the character depends on the intent of the user in the hunter test mentioned above, i.e., the action of the character 51. Therefore, from the very beginning of the game, the user can play with a goal of becoming a particular hunter category, e.g., "PHANTOM HUNTER" or the like. A special items determined according to the hunter category is given as reward by the CPU 2 to the character 51 having a hunter title. Such a character 51 can use the special item by the "USE ITEM" command in the match mentioned below.

When the character 51 operated by the user is qualified as a hunter, the user can set a new character (i.e., a disciple of the master) for making this character 51 as master. The user can again challenge the hunter test mentioned above by operating the new character .

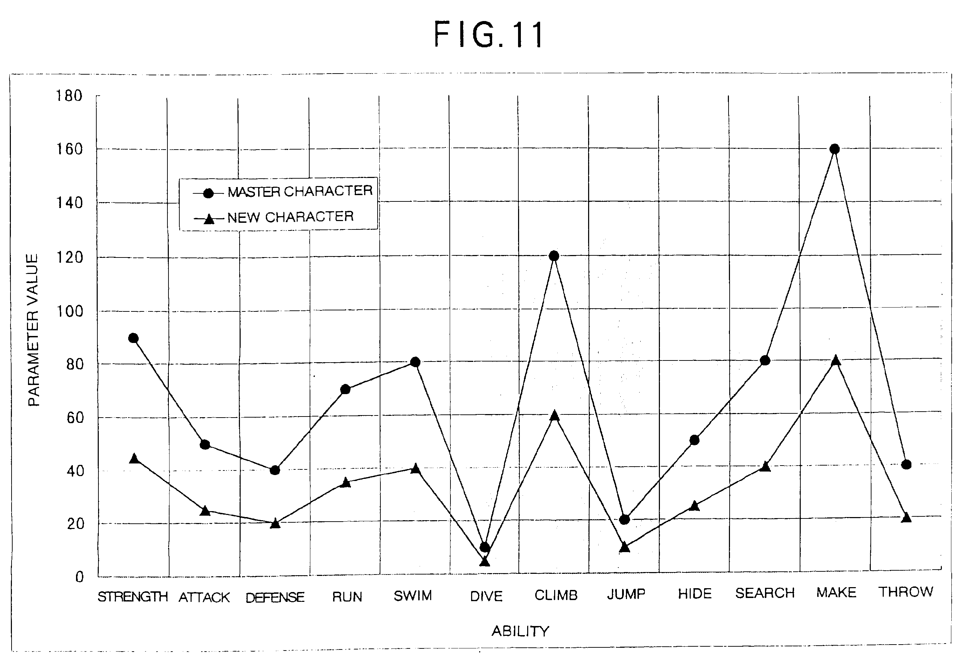

A plurality of initial parameters and possessed items of this new character at the beginning are set by the CPU 2 based on the plurality of parameters indicating the skill of the master and the items acquired by the master. To be more specific, the plurality of parameters indicating the skill of this new character is set by multiplying the plurality of parameters indicating the skill of the master by a prescribed rate. For example, as shown in FIG. 11, the parameter obtained by multiplying the respective parameter of the master by a rate 0.5 will be a parameter indicating the skill of the new character. Also, the new character is set to possess a part of items that the master has acquired. In other words, the new character succeeds the skill of the master.

For instance, if the master is a "GOURMET HUNTER", the new character is given a title of "GOURMET HUNTER CANDIDATE" by the CPU 2, and can obtain the information and items, unavailable for characters other than the "GOURMET HUNTER CANDIDATE". Also, the character "GOURMET HUNTER CANDIDATE" (the master exists) can encounter events set for respective hunter category, and can increase its parameter as that hunter category, or obtain items particular to that hunter category.

When the character "HUNTER CANDIDATE" uses an item for this hunter, it will achieve more excellent effect than that item used by other characters. For example, if a "GOURMET HUNTER CANDIDATE" uses an item "KITCHEN KNIFE", which is an item for the gourmet hunter, he/she can prepare a dish of higher level than the other characters using the same item.

In addition, for these new characters, the total of a plurality of parameters is set several ten percents higher than the character 51 which does not base on the master. In other words, it is advantageous for the user to set a new character 51 based on the master, than to set a new character 51 without being based on the master. However, as mentioned above, for instance, a new character 51 set as a "GOURMET HUNTER CANDIDATE" may be disadvantageous, according to the hunter test contents set at random by the CPU 2, because its particular parameters such as "MAKE" is certainly high, but, instead, some parameters are low.

The new character 51 set as a "GOURMET HUNTER CANDIDATE" has much chance to be a "GOURMET HUNTER" when the character 51 achieves the clear conditions set to the final test, because the new character 51 succeeds a plurality of parameters and obtained items of the master "GOURMET HUNTER". However, as mentioned above, the new character 51 may happen to be a hunter other than the "GOURMET HUNTER" depending on its action in the hunter test, because the setting the hunter title is based on the plurality of parameters and obtained items of the character 51 when it achieves the clear conditions set to the final test. For instance, the character 51 may be another hunter than the master, by collecting items different from the hunter category of the master so that the total of point of the collected items exceeds the total points of the items succeeded from the master.

Also, it is possible to set a plurality of new characters 51 based on a single master.

When a new character 51 set based on a master achieves the clear conditions of the final test and is qualified as a hunter, the new character 51 can become a master. In other words, still another new character 51 can be set, based on the plurality of parameters and obtained items of the new character 51 qualified as a hunter.

Thus, in the "MAIN GAME", the user can experience the entitlement of a hunter, final goal, by operating the character 51 and achieving various clear condition set to the hunter test. Since there are various hunter titles, and the hunter title given to the character 51 operated by the user is decided by the user's intent, i.e., by the action of the character 51, the user can play a game with large degree of freedom.

In addition, when the character 51 operated by the user is qualified as a hunter, since the user can repeat the experience by creating a new character 51 succeeding the skill of one of characters 51 and getting the title of hunter again by challenging the hunter test, the user can feel a stronger empathy to the character 51 that he/she has trained, and enjoy producing a lot of favorite characters and collecting them. Further, since the collected characters can be selected and used in the "MATCH GAME" mentioned below, the user does not get tired of this game and keeps on playing to make a stronger character 51.

### [3] Outline of MATCH GAME

Next, the contents of "MATCH GAME" shown in FIG. 2 will be described.

When a hunter title is given to the character 51 operated by the user, as mentioned above, the character 51 can participate in the "MATCH GAME" which is set in advance in the program and executed by the CPU 2.

The match game includes, in addition to a match with a character 51 qualified as a hunter set in advance in the program and controlled by the CPU 2, a match with a character 52 qualified as a hunter and operated by other user.

In the match with a character qualified as a hunter set in the program and controlled by the CPU 2, the character controlled by the CPU 2 plays a match against the character 51 qualified as a hunter and operated by the user on a single game system 1.

On the other hand, in the match with a character 52 qualified as a hunter and operated by the other user, a plurality of game systems 1 are used. For example, in a match of one-user VS one-user, the communication connectors 15 of two game systems 1 are connected to each other by a communication cable (or possibly by an infrared communication unit 16), and two characters respectively created by two users are operated alternatively by the controller 10. In a match two-users VS two-users, four game systems 1 are connected as shown in FIG. 3, by the communication cable and infrared communication unit 16. The four users make two teams each having two members, and operate characters created by respective users alternatively by the controller 10. Moreover, as shown in FIG. 4, four users may be opposed to each other (i.e., 1 VS 1 VS 1 VS 1) through the infrared communication unit 16 using four game systems 1. In addition, in a communication match using a plurality of game systems 1, instead of users, a character 51 qualified as a hunter preset in the program and controlled by the CPU 2 can also be set as an opponent. Besides, a communication match by four characters operated by the user versus four characters controlled by the CPU 2 is also possible, and various communication matches are possible by setting.

The match game executed by the CPU 2 is performed with the same map and conditions as the hunter test selected by the user with the controller 10 from a plurality of tests executed by the CPU 2 in the hunter test mentioned above, and the match game ends when the conditions are satisfied. Moreover, the match game also ends when HP of all characters of either party (team) becomes "0" by attack.

In the match game, the character 51 operated by the user can achieve the hunter test mentioned above, and act based on the plurality of parameters at the time when it is qualified as a hunter. The character 51 operated by the user can use obtained items. The character 51 can encounter events set for each hunter category, and if an item for this hunter category is used, it results better effects than when that item is used by the other character. Therefore, the superiority in match game changes according to the hunter category.

Thus, the user can use the character 51, which is trained by the user and qualified as a hunter in the hunter test of the main game mentioned above, in the match game, which is another game. Therefore, the user can all the more attached to the character 51 that he/she has trained.

### [4] Operation in Main Game

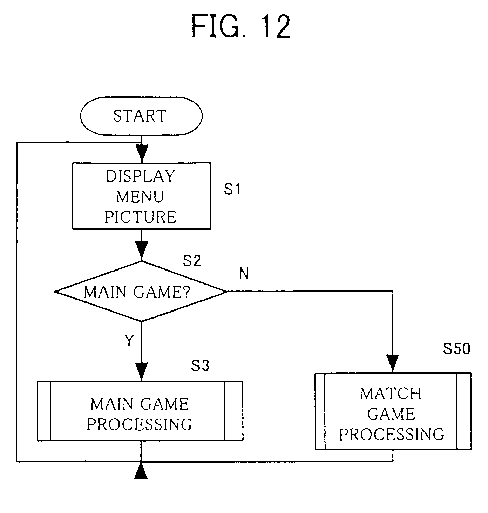

Now, the operation of the game system 1 when the user plays the "MAIN GAME" will be described by referring to FIG. 12 to FIG. 18.

First, when the game program is started, as shown in FIG. 12, the CPU 2 reads out video data from the semiconductor memory in the external ROM cartridge 8, stores the video data in the video RAM 5 and displays the menu picture on the video display device 12 (S1). Here, the video data includes text data.

Next, when the user selects the "MAIN GAME", which is the first mode, on the menu picture displayed on the video display device 12 by pressing the cross key 10a and then presses down the start key 10d, the controller 10 outputs a signal indicating the main game to the CPU 2 through the interface 9. Then, the CPU 2 judges if the signal input from the controller 10 is a signal indicating the main game (S2). As the result, if it is judged to be the signal indicating the main game, the CPU 2 executes the processing of the main game (S3).

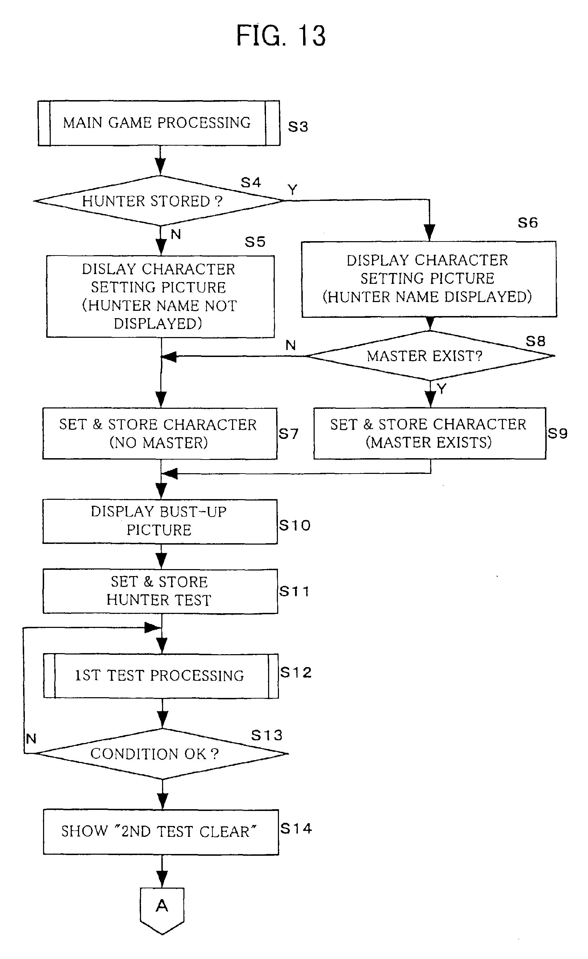

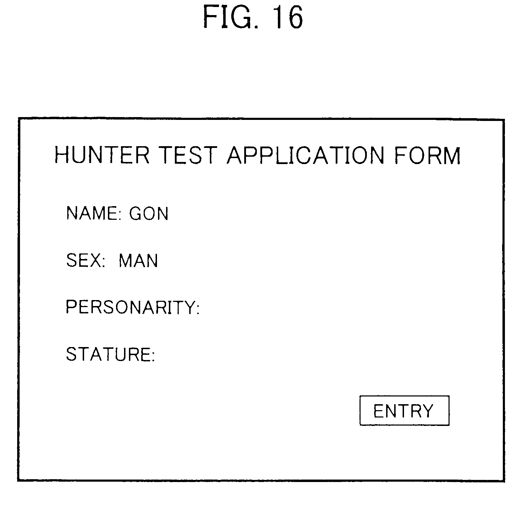

In the processing of the main game, as shown in FIG. 13, first, it is judged if a character qualified as a hunter is already set and if data concerning the character is stored or not, by referring to the battery backup RAM contained in the external ROM cartridge 8 (S4). If data concerning the character is not stored, the CPU 2 displays the character setting picture (an example is shown in FIG. 16) on the video display device 12. On the other hand, if data concerning the character qualified as a hunter is stored in the battery backup RAM, the CPU 2 reads out the data and stores it in the working RAM 4. Moreover, the CPU 2 displays the character setting picture on the video display device 12, and at the same time, displays the name of such a character, the name as a hunter, or the like on the video display device 12 (S6).

Next, when the user selects "NAME", "SEX", "PHYSIQUE" or the like of the character to be operated by manipulating the cross key 10a on the character setting picture shown on the video display device 12 and then presses down the decision key 10b, the CPU 2 recognizes the signal from the controller 10, sets a plurality of parameters and the items that the character possesses, and stores data about a new character 51 in the working RAM 4 (S7).

On the other hand, when a character qualified as a hunter is displayed on the character setting picture (S6), if the user selects a master character, selects "NAME", "SEX", "PHYSIQUE" or the like of the character 51 to be operated, and presses down the decision key lOb, the controller 10 outputs a master present signal indicating the presence of the master to the CPU 2 through the interface 9. Then, the CPU 2 judges if the signal input from the controller 10 is a master present signal or not (S8). As the result, if it is a master present signal, the CPU 2 sets a character 51 based on the plurality of parameters indicating the skill of the character to be master and obtained items of such a character, and stores data for the character 51 in the working RAM 4 (S9). If it is not a master present signal, the CPU 2 performs the processing of the step S7.

Here, the CPU 2 may also set a character 51 based on a plurality of parameters indicating the skill of the character as master preset in the game program (not the character operated by the user) according to the instruction of the user.

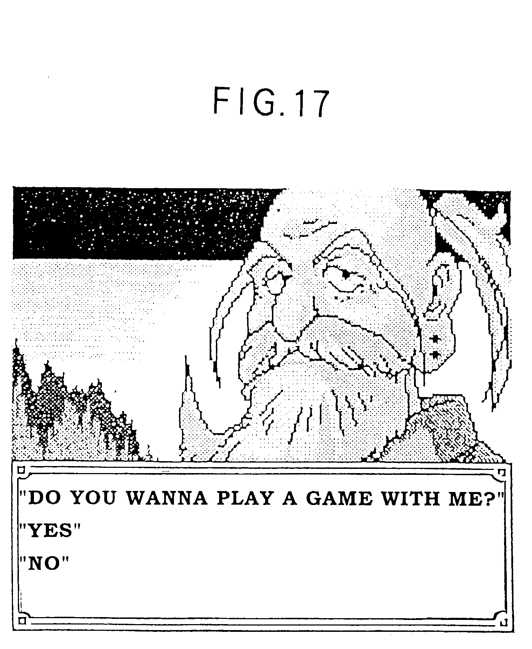

Next, the CPU 2 displays a picture concerning the story of this game (hereinafter referred to as "bust-up picture") on the video display device 12 (S10). Each time the user presses down the decision key 10b in the state of bust-up picture (an example is shown in FIG. 17), a new screen and text are read out by the CPU 2 and sequentially displayed on the video display device 12. In addition, the CPU 2 passes audio data stored in the audio RAM 6, as necessary, to the audio processing circuit 13 to output sound from the speaker 14 according to the game program.

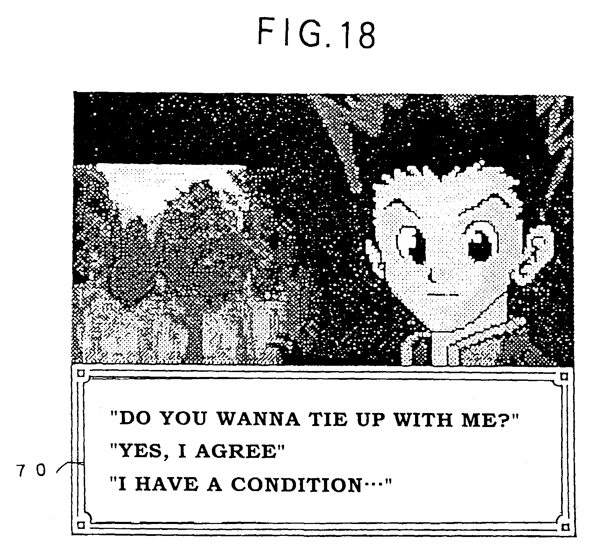

Here, these sequentially displayed bust-up pictures are simply composed of 3 to 10 pictures. In this bust-up picture, other character 52 may talk to the user-operated character 51, or the user-operated character 51 may talk to other character 52. The parameter indicating the relationship with other character 52 or the parameter indicating the skill of the user-operated character 51 change according to the option of conversation (an example is shown by the symbol 70 in FIG. 18) of this moment. Also, for what goal to act in the simulation step will be explained here.

Next, the CPU 2 refers to the semiconductor memory contained in the external ROM cartridge 8, selects at random and decides 5 tests (first test to fifth test (final test)) to be used as the hunter test from a plurality of tests prepared therein. Then, the CPU 2 stores data for the 5 sets of tests into the working RAM 4, video RAM 5 and audio RAM 6 (S11). These data are read out by the CPU 2, as needed, according to the game program in the following processing and output to the video display device 12 and/or the speaker 14.

Next, the CPU 2 refers to the semiconductor memory and the working RAM 4 contained in the external ROM cartridge 8 and performs the processing of the first test (S12). The detail of the first test will be described later.

Then, the CPU 2 judges if the clear conditions set for the first test are satisfied or not (S13). If these conditions are not satisfied, the CPU 2 repeats the processing of the aforementioned step S12. On the other hand, if these conditions are satisfied, the CPU 2 displays that "FIRST TEST CLEARED" (S14) and terminates the processing of the first test.

Next, the CPU 2 displays a bust-up picture for moving to the second test on the video display device 12.

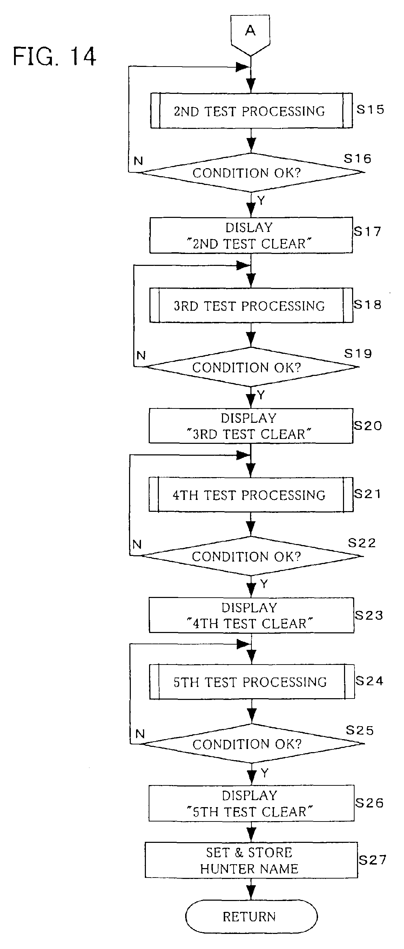

Then, as shown in FIG. 14, the CPU 2 refers to the semiconductor memory and the working RAM 4 contained in the external ROM cartridge 8 and performs the processing of the second test (S15), and judges if the clear conditions set for the second test are satisfied or not (S16), as in the first test. If these conditions are satisfied, the CPU 2 displays that "SECOND TEST CLEARED" (S17) and terminates the processing of the second test, and moves to the processing of the third test (S18).

In this way, the CPU 2 executes the processing of the third test (S18), the processing of the fourth test (S21) and the processing of the fifth test (final test) (S24) successively as in the processing of the first test and the second test. Then, the CPU 2 judges if the clear conditions set for the fifth test (final test) are satisfied or not (S25), and if these conditions are judged to be satisfied, the CPU 2 displays that the hunter test is cleared (S26).

Next, the CPU 2 refers to the working RAM 4, sets one of a plurality of hunter titles prepared beforehand in the program, to the character 51 based on the plurality of parameters and possessed items of the character 51 operated by the user at the end of the fifth test, and stores them in the working RAM 4 (S27). Moreover, the CPU 2 stores the special item (given as award) in an area for storing the possessed items of the working RAM 4.

Thus, as mentioned above, the character 51 passed the hunter test can achieve the final goal by getting the hunter title, and such a character 51 can become a master. Then, the user can create a new character (disciple) succeeding the parameters and the possessed items of the master in the aforementioned step S9 and perform again the hunter test by the processing from the step S10 to the step S27.

Data concerning the character 51 qualified as a hunter or data of respective test (test name or the like) of the hunter test are stored by the CPU 2 in a battery backup RAM contained the external ROM cartridge 8 based on the signal from the controller 10.

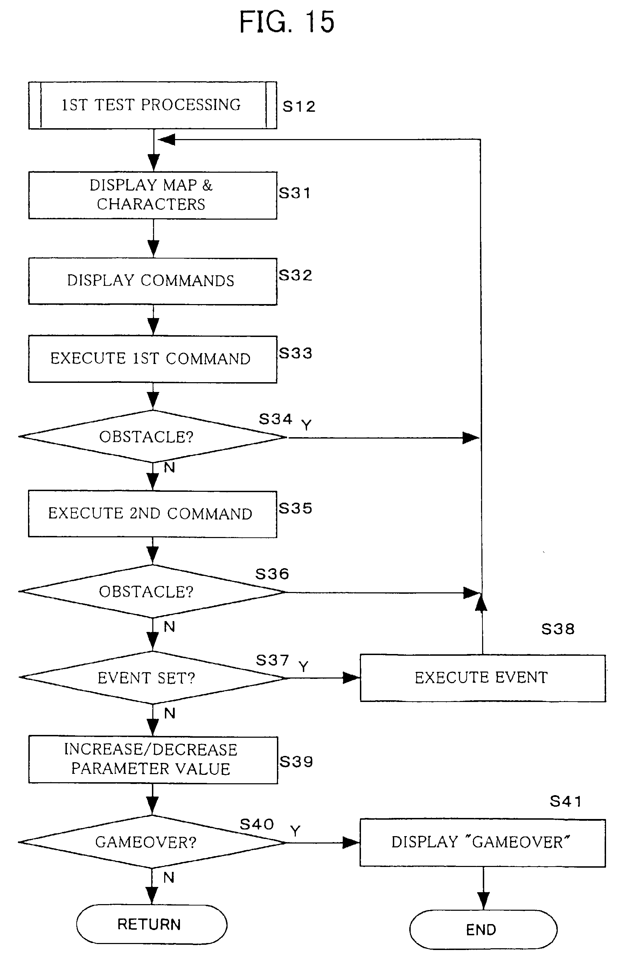

Now, by referring to FIG. 15, the processing of the first test (S12) will be described in detail. It is noted that the description of the processing of the second test (S15), the third test (S18), the fourth test (S21) and the fifth test (S24) are omitted because they are substantially similar to the processing of the first test (S12), except for kind of maps or ending conditions.

When the processing of the first test is performed, the CPU 2 displays the map and a plurality of characters including the character 51 operated by the user on the video display device 12 (S31) and outputs sound to the speaker 14.

Next, in this state, when the user presses down the operation selector key 10c or the decision key 10b, the CPU 2 reads out the command picture from the video RAM 5 and displays it on the video display device 12 (S32). When the user selects the first command in the command picture by manipulating the cross key 10a and presses down the decision key 10b, the CPU 2 executes the command (S33).

Next, the CPU 2 judges if there is an obstacle for command execution (S34). If there is an obstacle for command execution, the CPU 2 does not execute the command but returns to the step S31. For example, there is an obstacle for command execution, when the user selects and decides "MOVE" command, but the destination on the map of the user-operated character 51 after the movement is a square in which other character 52 is present. On the other hand, if there is no obstacle for command execution, the CPU 2 receives a second command from the user and executes the command (S35). Also in this time, the CPU 2 judges if there is an obstacle for command execution (S36). Here, the character operated by the user can perform up to two actions in a single routine, and when the first command "RUN" is executed and the second command "ATTACK" follows, the CPU 2 displays, on the map displayed on the video display device 12, the character 51 operated by the user running after and attacking other character 52. At the same time, all other characters on the map begins action. Here, the action success rate of the character 51 or the impact degree to other character 52 are calculated, as shown in FIG. 10, by the CPU 2 based on the plurality of parameters indicating the skill of the character 51 and the character 52, equipped items, and skill value of items.

Next, the CPU 2 executes the command and then judges if an event is set or not (S37). If an event is set, the CPU 2 executes such an event (S38). For instance, if the user selects and decides the "MOVE" command, and if the event "ENTRAPPED" is set in the destination square 50 positioned in the course of movement of the character 51 on the map, the character 51 will be entrapped and the HP of the character 51 decreases. In addition, various events are set in advance in the game program, and events to start mini games having action-like nature or the like are set.

The HP of the character 51 increases/decreases in the processing from the step S33 to the step S36, or in the processing of the step S38.

Next, the CPU 2 increases a plurality of parameters indicating the skill of the character 51, or parameters concerning the use of items, stored in the working RAM 4 according to the executed command or the event, as mentioned above (S38). In addition, the CPU 2 decreases the parameter corresponding to the commands which are not executed.

Next, the CPU 2 judges if the game is over or not (S40). For instance, if the HP of the character 51 is "0", the CPU 2 displays "GAMEOVER" on the video display device 12 (S41), and ends the hunter test processing.

On the other hand, if the game is not over, the CPU 2 proceeds to the step S13 shown in FIG. 13.

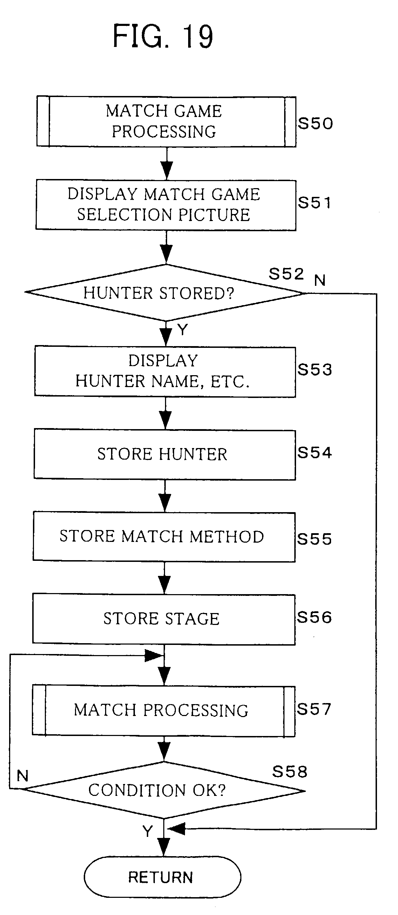

Now, referring to FIG. 12 and FIG. 19, the operation of the game system 1 when the user plays the "match game" using the character qualified as the hunter will be described.

First, as shown in FIG. 12, when the user selects "MATCH GAME", which is a second mode in the menu picture displayed on the video display device 12, by manipulating the cross key 10a and then presses down the decision key 10d, the controller 10 outputs a signal indicating the match game to the CPU 2. Then, if the CPU 2 judges that the signal input from the controller 10 is not a signal indicating the "MAIN GAME" (S2), the CPU 2 executes the processing of match game (S50).

When the processing of match game is executed, as shown in FIG. 19, the CPU 2 reads out necessary video data and audio data from the semiconductor memory contained in the external ROM cartridge 8, and stores them temporarily in the video RAM 5 and the audio RAM 6. Then, the CPU 2 displays the match selection picture on the video display device 12 (S51).

Next, the CPU judges if a character qualified as a hunter is stored by referring to the battery backup RAM contained in the external ROM cartridge 8 (S52). If such a character 51 is stored, the CPU 2 displays letters including the name of the character 51 qualified as a hunter, and the test name on the match selection picture on the video display device 12 (S53).

Next, when the user selects the match pattern (i.e., "one VS one" or "two VS two" or the like) on the match selection picture displayed on the video display device 12 and presses down the decision key 10b, the CPU 2 stores data concerning the selected match pattern in the working RAM 4 (S54).

Next, when the user selects the character qualified as a hunter to be used for the match play by manipulating the cross key 10a on the match selection picture displayed on the video display device 12 and presses down the decision key 10b, the CPU 2 stores data concerning such a character in the working RAM 4 (S55). Here, the characters 51 that can be selected by the user includes, in addition to the character 51 qualified as a hunter in the aforementioned hunter test, characters qualified as a hunter which are set beforehand in the game program.

Next, when the user selects a stage to be used as field of match play by manipulating the cross key 10a on the match selection picture displayed on the video display device 12 and presses down the decision key 10b, the CPU 2 stores data concerning the stage in the working RAM 4 (S56). A plurality of stages are set in advance in the game program, and are similar to the tests executed in the hunter test. In addition, tests that can be selected by "match game" may be limited to tests executed and cleared in the aforementioned hunter test.

Next, when the user presses down the start key 10d, the CPU 2 refers to the semiconductor memory contained in the external ROM cartridge 8 or working RAM 4, and executes the processing of "match game" (S57).

When the match is executed, the CPU 2 displays the map of the selected test and a plurality of characters including the character 51 operated by the user on the video display device 12 and outputs sound to the speaker 14 according to the game program stored in the semiconductor memory contained in the external ROM cartridge 8.

In principle, the match processing (S57) is similar to the aforementioned processing of the first test (S12), and when the user (team) or the CPU 2 selects and decides the action (command) to be taken by the characters, they begin to act at the same time, and the action results will be displayed. In addition, when a plurality of game systems 1 are used, the game systems 1 communicate with each other through a communication means such as a communication cable or an infrared communication unit 16.

Then, the CPU 2 judges if the clear conditions set for the test selected on the mach game selection picture are satisfied by the character 51 operated by the user (team) or the character operated by the CPU 2 (S58), and terminates the match game processing, if the conditions are satisfied.

The present invention is not limited to the embodiment mentioned above, but can be applied to any system for executing a game to make the character act repeatedly, regardless of genres (roll playing game, simulation game, or the like). In addition, the present invention can be applied to any home game system such as Game Boy^{(TM)}, Play Station^{(TM)}, Dream Cast^{(TM)} or the like, or any commercial game system.

As described above, according to the invention, the user can experience the qualification as a hunter, which is a final goal, by operating the character and achieving various conditions set to the hunter test. Besides, there are various hunter titles, and the hunter title is obtained by the character to be operated by the user dependently upon on the user's intents, namely the action contents of the character, and hence the user can play a game with an extremely large degree of freedom. Therefore, the user can feel a strong empathy to the character that he/she has operated and trained.

Moreover, once the character to be operated by the user has become a hunter, the user can create a new character succeeding the skill of the character, and repeat the experience of entitlement as a hunter by challenging the hunter test. Therefore, the user can feel a much stronger empathy to the character that he/she has operated and trained, and can create and collect a number of favorite characters.

In addition, since a great number of characters, which are operated by the user and qualified as a hunter, can be used in the match game, which is another game, the user may not get tired of the game and keep on enjoy playing to create stronger characters.

## Claims

1. A game system (1) comprising a display unit (11, 12) for displaying game picture, an input unit (10) for outputting a signal corresponding to an operation by a user, and a game control unit (2) for executing a game based on a game program by referring to the signal from the input unit (10) and for reflecting situation of the game on the game picture, wherein the game control unit (2) comprises:
a character creating means for creating information concerning a user-operated character to be operated by the user by referring to the signal from the input unit;
a first game executing means for executing a first game by controlling action of the user-operated character on a virtual game field based on the signal from the input unit and for changing the information concerning the user-operated character according to results of the action; and
an attribute allotting means for ending the first game if a prescribed condition is satisfied in the first game, and for allotting one or more attribute to the user-operated character based on the information concerning the user-operated character at the time when the first game is ended,
wherein the character creating means creates the information concerning the user-operated character based on the information concerning the user-operated character to which the attribute is allotted.

2. A game system (1) comprising a display unit (11, 12) for displaying game picture, an input unit (10) for outputting a signal corresponding to the operation by a user, and a game control unit (2) for executing a game based on a game program by referring to the signal from the input unit (10) and for reflecting situation of the game on the game picture, wherein the game control unit (2) comprises:
a character creating means for creating information concerning a user-operated character to be operated by the user by referring to the signal from the input unit;
a mode selecting means for selecting one of a first mode and a second mode;
a first game executing means for executing a first game by controlling action of the user-operated character on a virtual game field based on the signal from the input unit when the first mode is selected, and for changing the information concerning the user-operated character according to the results of the action;
an attribute allotting means for ending the first game if a prescribed condition is satisfied in the first game, and for allotting one or more attribute to the user-operated character based on the information concerning the user-operated character at the time when the first game is ended; and
a second game executing means for executing a second game when the second mode is selected, the second game executing means using the user-operated character to which the attribute is allotted and executing the second game in which dominance between characters changes according to the attribute;
wherein the character creating means creates the information concerning the user-operated character based on the information concerning the user-operated character to which the attribute is allotted.

3. The game system (1) according to claim 2, further comprising a memory device (4) for storing the information concerning the user-operated character to which the attribute is allotted, every time when the attribute is allotted to the user-operated character by the attribute allotting means,
wherein the game control unit (2) comprises a character selecting means for selecting two or more characters from the characters, for which the information is stored in the memory device, when the second mode is selected; and
wherein the second game comprises a match game for competing by using two or more characters selected by the character selecting means.

4. The game system (1) according to any one of claims 1 to 3, further comprising a memory device (4) for storing the information concerning the user-operated character to which the attribute is allotted, every time when the attribute is allotted to the user-operated character by the attribute allotting means,
wherein the character creating means selects the character from the characters for which the information is stored in the memory device (4) and creates the information concerning the user-operated character based on the information concerning the selected character.

5. The game system (1) according to any one of claims 1 to 4, wherein the character creating means creates the information concerning the user-operated character based on the information concerning one or more characters to which attribute is allotted in advance.

6. The game system (1) according to any one of claims 3 to 5, wherein the character selecting means selects one or more character to which attribute is allotted in advance.

7. The game system (1) according to any one of claims 1 to 6, wherein the character creating means creates the information concerning the user-operated character based on the information concerning a single character to which the attribute is allotted.

8. The game system (1) according to any one of claims 1 to 7, wherein allotting the attribute to the user-operated character at the end of the first game is performed independently of the information concerning the character to which the attribute is allotted.

9. The game system (1) according to any one of claims 1 to 8, wherein the first game comprises a plurality of stages each having different ending condition, wherein the prescribed condition in the first game is satisfied when all of the ending conditions of the plurality of stages are satisfied, wherein advantages and disadvantages for satisfying the ending conditions change according to the information concerning the user-operated character, and wherein advantages and disadvantages for satisfying the ending conditions are different from each other for the plurality of stages if the information concerning the user-operated character is fixed.

10. The game system (1) according to any one of claims 1 to 9, wherein the information concerning the user-operated character includes a plurality of parameters defining the skill of the character, and the possession information of a plurality of items each prepared as a factor for changing the skill of the character.

11. The game system (1) according to claim 10, wherein the plurality of parameters are created by multiplying the plurality of parameters to which the attribute is allotted by a prescribed rate.

12. The game system 81) according to claim 10 or claim 11,
wherein each of the plurality of items is allotted with a characteristic indicating one of the plurality of attributes and a point indicating magnitude of the characteristic;
wherein the game control unit (2) comprises a total point calculating means for calculating the total point for each of the characteristics of the item that the user-operated character possesses at the end of the first game; and
wherein the attribute allotting means creates the information concerning the user-operated character based on the total point calculated by the total point calculating means.

13. The game system (1) according to claim 12, wherein the attribute allotting means allots an attribute corresponding to the characteristic having a largest total point to the user-operated character when there is only one characteristic having the largest total point calculated by the total point calculating means, and allots an attribute corresponding to one of the characteristics having the largest total point to the user-operated character, based on a plurality of parameters defining the skill of the user-operated character, when there are two or more characteristics having the largest total point calculated by the total point calculating means.

14. The game system (1) according to any one of claims 1 to 13, wherein a result of the action of the user-operated character in the first game is determined based on the information concerning the user-operated character.

15. A computer readable storage medium (8) storing game program for executing a game based on a game program by referring to a command given by a user through an input unit (10) and by reflecting situation of the game on a game picture, wherein the game program makes the computer function as:
a character creating means for creating information concerning a user-operated character to be operated by the user by referring to the signal from the input unit;
a first game executing means for executing a first game by controlling action of the user-operated character on a virtual game field based on the signal from the input unit and for changing the information concerning the user-operated character according to results of the action; and
an attribute allotting means for ending the first game if a prescribed condition is satisfied in the first game, and for allotting one or more attribute to the user-operated character based on the information concerning the user-operated character at the time when the first game is ended,
wherein the character creating means creates the information concerning the user-operated character based on the information concerning the user-operated character to which the attribute is allotted.
